# EUROPÄISCHE PATENTSCHRIFT

(11) **EP 3 844 048 B1**
(45) Veröffentlichungstag und Bekanntmachung des Hinweises auf die Patenterteilung: **06.09.2023**
(21) Anmeldenummer: 19737502.5
(22) Anmeldetag: 03.07.2019
(51) Int. Cl.: B62D 15/02, G05D 1/00, B60W 50/08, B60W 30/095, G05D 1/02, B60W 50/14, B60W 50/00, B60W 40/09

(54) **MENTORENVORRICHTUNG ZUM ASSISTIEREN EINES BENUTZERS BEI DER HANDHABUNG EINES VORBESTIMMTEN OBJEKTS, KRAFTFAHRZEUG UND VERFAHREN**
MENTOR DEVICE FOR ASSISTING A USER IN THE HANDLING OF A PREDETERMINED OBJECT, MOTOR VEHICLE AND METHOD
DISPOSITIF DE GUIDAGE POUR ASSISTER UN UTILISATEUR DANS LA MANIPULATION D'UN OBJET PRÉDÉTERMINÉ, VÉHICULE À MOTEUR ET PROCÉDÉ

(30) Priorität: 29.08.2018 DE 102018214665
(43) Veröffentlichungstag der Anmeldung: 07.07.2021
(73) Patentinhaber: VOLKSWAGEN AKTIENGESELLSCHAFT, 38440 Wolfsburg (DE)
(72) Erfinder: SCHACHER, Samuel, 10629 Berlin (DE)
(86) Internationale Anmeldenummer: PCT/EP2019/067809
(87) Internationale Veröffentlichungsnummer: WO 2020/043366

(56) Entgegenhaltungen:
- EP-A2- 2 858 060
- DE-A1-102009 020 649
- DE-A1-102013 019 424

## Beschreibung

Die Erfindung betrifft eine Mentorenvorrichtung zum Assistieren eines Benutzers bei der Handhabung eines vorbestimmten Objekts, ein Kraftfahrzeug mit einer Mentorenvorrichtung und ein Verfahren zum Assistieren eines Benutzers bei der Handhabung eines vorbestimmten Objekts.

Als Mentorenvorrichtung wird eine Vorrichtung bezeichnet, deren Ziel es ist, einem Benutzer die Handhabung eines Objekts längerfristig beizubringen, sodass dieser die Vorrichtung nach erfolgreichem Lernvorgang nicht mehr benötigt.

Zur Erhöhung der Sicherheit von Kraftfahrzeugen ist es verbreitet, Fahrerassistenzsysteme in Kraftfahrzeugen zu integrieren, welche den Fahrer beim Führen des Kraftfahrzeugs auf verschiedene Arten unterstützen. In der Regel erfolgt dies durch einen direkten Eingriff in kritischen Situationen. Als Beispiele für Fahrerassistenzsysteme, welche die Sicherheit erhöhen sollen, sind beispielsweise die Fahrhilfen ABS (Antiblockiersystem) und ESC (Elektronisches Stabilitätsprogramm) zu nennen, welche die Kontrolle des Fahrers über das Fahrzeug verbessern, aber seinen Fahrerwunsch respektieren. Eine weitere Kategorie an Fahrerassistenzsystemen sind Fahrerassistenzsysteme zur Steigerung des Fahrkomforts. Dabei handelt es sich beispielsweise um Fahrabstandsregeleinheiten, welche in die Steuerung des Fahrzeugs eingreifen, um einen Abstand zu einem voranfahrenden Kraftfahrzeug einzustellen. Eine weitere Kategorie bilden Fahrerassistenzsysteme, welche den Fahrer bei Unaufmerksamkeit während des Führens des Kraftfahrzeugs unterstützen. Zu dieser Kategorie gehören beispielsweise Spurhalteassistenten, welche einen Fahrer bei einem Überschreiten einer Fahrspur mittels eines Warnsignals darauf hinweisen. Die genannten Fahrerassistenzsysteme sind dazu eingerichtet, in vorbestimmten Situationen, welche sich auf einen aktuellen Zustand des Fahrzeugs beziehen, einzugreifen. Eine Mentorenvorrichtung zielt hingegen auf eine längerfristige Steigerung des Fahrkönnens des Benutzers durch ein aktiv unterstütztes Fahrertraining und reduziert damit die Eingriffswahrscheinlichkeit klassischer Fahrerassistenzsysteme.

Die DE 10 2013 019 424 A1 offenbart ein Verfahren zum Betrieb eines Fahrzeugsystems zur Überwachung eines nur unter Überwachung eine Fahrerlaubnis aufweisenden Fahrers in einem Kraftfahrzeug, wobei eine Referenztrajektorie bestimmt wird und Abweichungsinformationen zu der Referenztrajektorie erzeugt werden. Die Abweichungsinformationen und/oder deren zeitlicher Verlauf werden hierbei gegen wenigstens ein einer Maßnahme zugeordnetes Maßnahmenkriterium geprüft und bei Erfüllung des Maßnahmenkriteriums die Maßnahme durchgeführt. Bei den Maßnahmen kann es sich beispielsweise um Eingriffe in die Fahrzeugführung oder eine Ausgabe von Hinweisen handeln. Es ist auch vorgesehen, einen Gefährdungswert zu bestimmen, wobei bei Überschreitung eines Überwachungsschwellenwerts für den Gefährdungswert als Maßnahme wenigstens ein einer erhöhten Sicherheit zuträglicher Eingriff durchgeführt wird.

Die DE 10 2005 055 744 A1 beschreibt ein Fahrerassistenzsystem für ein Kraftfahrzeug mit einem Informationssystem, welches dazu eingerichtet ist, Daten über die Verkehrsinfrastruktur und einen Zustand des Fahrzeugs zu erfassen. Anhand eines erfassten Dynamikverlaufs werden Hinweise zur Führung des Fahrzeugs erzeugt und über eine Ausgabeeinrichtung ausgegeben. Die Hinweise können beispielsweise eine Korrektur einer Geschwindigkeit, eine Schaltempfehlung oder einen Zeitpunkt für einen optimalen Bremspunkt bei Einfahrt in die Kurve umfassen.

In der Veröffentlichung ABBINK, D. A. ; MULDER, M. ; BOER, E. R.: Haptic shared control: Smoothly shifting control authority? In: Cognition, Technology & Work 14 (2012), Nr. 1, S. 19-28 wird der Begriff "Level of Haptic Authority" eingeführt, welcher beschreibt, wie stark eine Vorrichtung in die Handhabung eingreift. Dieser wird in der Veröffentlichung abhängig von einer situativen Gefährdungsbewertung variiert. Der "Level of Haptic Authority" wird in diesem Patent mit dem deutschen Begriff "Eingriffsintensität" übersetzt.

Die EP 2 858 060 A2 offenbart ein Kraftfahrzeug und ein Verfahren zur Steuerung eines Kraftfahrzeugs. Das Kraftfahrzeug umfasst wenigstens ein Fahrerassistenzsystem, das ausgebildet ist, bei Erfüllung wenigstens einer Auslösebedingung eine Hinweiseinrichtung zur Gabe eines Hinweises an einen Fahrer und/oder an Dritte anzusteuern und/oder in die Fahrzeugführung einzugreifen. Das Fahrerassistenzsystem ist dazu ausgebildet, unter wenigstens einer Randbedingung fahrbare Trajektorien und/oder Trajektorienscharen durch Auswertung von das Kraftfahrzeug betreffenden Egodaten und das Kraftfahrzeugumfeld betreffenden Umfelddaten zu berechnen und aus den berechneten Trajektorien und/oder Trajektorienscharen einen Fahrmöglichkeitswert zu bestimmen, der ein Maß für die Menge der Fahrmöglichkeiten eines Fahrers ist, wobei wenigstens eine der Auslösebedingungen das Unterschreiten eines vorgegebenen Grenzwertes durch den Fahrmöglichkeitswert ist.

Die DE 10 2009 020 649 A1 offenbart ein Verfahren und eine Vorrichtung zur Kollisionsvermeidung für ein Fahrzeug. Das Verfahren sieht vor, die Kollision durch ein Ausweichen vor einem Hindernis zu verhindern, wobei im Falle einer drohenden Kollision mehrere mögliche Ausweichtrajektorien bestimmt werden und den Ausweichtrajektorien Zeitabstandsgrenzen zugeordnet werden, die den Zeitabstand zum Hindernis repräsentieren, bei dem zur Kollisionsvermeidung ein Ausweichmanöver gemäß der jeweiligen Trajektorie spätestens eingeleitet werden muss. Bei Erreichen einer oder mehrerer der Zeitabstandsgrenzen wird jeweils eine für einen Fahrer des Fahrzeugs wahrnehmbare Warnung ausgelöst. Falls der Fahrer bis zum Erreichen der letzten der Zeitabstandsgrenzen auf die davor ausgelöste Warnung nicht reagiert, wird bei Erreichen der letzten Zeitabstandsgrenze ein autonomes Not-Ausweichen entlang der dieser Zeitabstandsgrenze zugeordneten Ausweichtrajektorie durchgeführt.

Die genannten Systeme haben den Nachteil, dass sie dem Fahrer auf Grundlage vordefinierter Eingaben assistieren. Um eine optimale Assistenz des Fahrers und eine größtmögliche Akzeptanz des Systems durch den Fahrer zu erreichen, ist es erforderlich, den Umfang des Eingriffs in die Fahrzeugführung an die Entwicklung seines Fahrkönnens anzupassen.

Es ist eine Aufgabe der Erfindung, ein System bereitzustellen, welches dazu eingerichtet ist, sich über einen längeren Verlauf unter Berücksichtigung des aktuellen Fahrkönnens eines Fahrers dessen Fahrkönnen zu verbessern.

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung und die Figuren offenbart.

Eine weitere Aufgabe der Erfindung ist es, ein System bereitzustellen, welches auch in einem intensiven Fahrertraining sich kontinuierlich an das Fahrkönnen des Fahrers anpasst und damit einen erhöhten Trainingsfortschritt gegenüber einem Fahrertraining ohne Mentorenvorrichtung erzielt.

Erfindungsgemäß wird eine Mentorenvorrichtung zum Assistieren eines Benutzers bei der Handhabung eines vorbestimmten Objekts bereitgestellt. Die Mentorenvorrichtung ist dazu eingerichtet, einen Sollverlauf der Handhabung, der dem Benutzer durch die Mentorenvorrichtung vermittelt werden soll, zu empfangen. Die Mentorenvorrichtung ist dazu eingerichtet, eine aktuelle Abweichung eines tatsächlichen Verlaufs der Handhabung, wie sie der Benutzer durchführt von dem Sollverlauf zu ermitteln und gemäß einem aktiven Unterstützungsprofil in die Handhabung einzugreifen, um die Abweichung zu reduzieren. Die Mentorenvorrichtung ist dazu eingerichtet, einen Akzeptanzwert zu ermitteln, welcher ein Abweichverhalten des Benutzers betreffend vergangene Abweichungen zum Sollverlauf über einen vorbestimmten Zeitraum beschreibt. Die Mentorenvorrichtung ist dazu eingerichtet, in Abhängigkeit von dem Akzeptanzwert den Sollverlauf dem anhand des Abweichverhaltens ermittelten, erwarteten weiteren tatsächlichen Verlauf anzunähern.

Mit anderen Worten handelt es sich bei der Mentorenvorrichtung um eine Vorrichtung, welche einen Benutzer bei dem Erlernen der Handhabung des vorbestimmten Objekts unterstützen soll. Die zu erlernende Handhabung ist durch den Sollverlauf definiert, welcher durch die Mentorenvorrichtung empfangen wird. Die Mentorenvorrichtung ist dazu eingerichtet, den tatsächlichen Verlauf der Handhabung durch den Benutzer zu erfassen und/oder zu empfangen und mit dem Sollverlauf der Handhabung zu vergleichen. Die Mentorenvorrichtung ist dazu eingerichtet, mittels des Vergleichs die aktuelle Abweichung der Handhabung durch den Benutzer zu bestimmen. Die Mentorenvorrichtung ist dazu eingerichtet, Eingriffe in die Handhabung durchzuführen, um die aktuelle Abweichung zu reduzieren. Die erfolgenden Eingriffe sind dabei in dem aktiven Unterstützungsprofil definiert. Die Mentorenvorrichtung ist dazu eingerichtet, das Abweichverhalten des Benutzers, welches einen Verlauf der vergangenen Abweichungen über einen vorbestimmten Zeitraum betrifft, zu erfassen und aufgrund des Abweichverhaltens den Akzeptanzwert zu ermitteln. Die Mentorenvorrichtung ist dazu eingerichtet, den empfangenen Sollverlauf dem tatsächlichen Verlauf anzunähern, wobei ein Umfang der Annäherung abhängig ist von dem Abweichverhalten. Der erwartete weitere tatsächliche Verlauf wird dabei auf Grundlage des Abweichverhaltens des Benutzers ermittelt.

Durch die Erfindung ergibt sich der Vorteil, dass die Mentorenvorrichtung den Umfang der Eingriffe und die Zielvorgaben dem Akzeptanzwert des Benutzers anpassen kann.

Es kann beispielsweise vorgesehen sein, dass die Mentorenvorrichtung ein Fahrassistenzsystem zum Erlernen eines vorbestimmten Fahrstils eines Fahrers eines Kraftfahrzeugs ist. Der zu erlernende Fahrstil kann in dem Sollverlauf vorgegeben sein. Es kann vorgesehen sein, dass die Mentorenvorrichtung den Sollverlauf, welcher eine Fahrtrajektorie beschreibt, empfängt. Die Mentorenvorrichtung kann kontinuierlich den aktuellen Fahrverlauf des Fahrers empfangen beziehungsweise aufzeichnen und mit dem Sollverlauf der Handhabung vergleichen. Der Sollverlauf kann beispielsweise den Verlauf einer Geschwindigkeit oder der Fahrzeugposition vorgeben. Die Abweichung kann dabei eine relative oder absolute Abweichung des tatsächlichen Verlaufs von dem Sollverlauf sein. Die Mentorenvorrichtung kann über unterschiedliche Unterstützungsprofile verfügen, die den Benutzer mit veränderlicher Eingriffsintensität bei der Handhabung des vorbestimmten Objekts assistieren. Die Mentorenvorrichtung kann die aktuelle Abweichung des Fahrers oder des Kraftfahrzeugs von der Solllinie erfassen und gemäß dem aktiven Unterstützungsprofil in die Handhabung des Fahrzeugs durch den Benutzer eingreifen. Ein Eingreifen kann eine Beeinflussung der durch den Fahrer eingestellten Stellgrößen umfassen oder eine komplette Festlegung einer vorbestimmten Größe durch die Mentorenvorrichtung. Die Mentorenvorrichtung kann dazu eingerichtet sein, die Abweichung über einen vorbestimmten Zeitraum zu protokollieren und basierend auf einer Veränderung der Abweichung über den Zeitraum ein Abweichverhalten zu bestimmen. Das Abweichverhalten kann beispielsweise ein Mittelwert sein oder eine Ableitung der Abweichung gegen die Zeit. Das Abweichverhalten kann als Akzeptanzwert von der Mentorenvorrichtung ausgegeben werden. Der Akzeptanzwert kann auch als Kooperationswert bezeichnet werden, welcher das Kooperationsverhalten des Benutzers mit der Mentorenvorrichtung beschreibt. Es kann vorgesehen sein, dass die Mentorenvorrichtung basierend auf dem ermittelten Akzeptanzwert Anpassungen in ihrer zukünftigen Funktion vornimmt. Erfindungsgemäß passt die Mentorenvorrichtung den Sollverlauf an, damit sich dieser dem erwarteten weiteren tatsächlichen Verlauf annähert oder anpasst. Dies kann so erfolgen, dass ein Profil erzeugt wird, welches das Abweichverhalten des Benutzers von dem Sollverlauf beschreibt. Das Profil kann dazu verwendet werden, den tatsächlichen Verlauf zu prognostizieren, welchen der Benutzer bei seiner Handhabung gemäß einer Extrapolation verfolgen wird. Der weitere Sollverlauf kann hierbei zwei Extremverläufe annehmen. Gemäß dem ersten Extremverlauf kann der zukünftige Sollverlauf dem empfangenen Sollverlauf entsprechen, dies würde einer minimalen Anpassung an den Benutzer entsprechen. In dem anderen Extremverlauf wird der weitere Sollverlauf derart angepasst, dass er dem erwartetem weiteren tatsächlichen Verlauf, welcher auf Grundlage des Benutzerverhaltens erstellt wurde, entspricht. Dies würde einem maximalen Entgegenkommen der Mentorenvorrichtung an den Benutzer entsprechen. Ein Adaptionswert wird eingeführt, um Sollverläufe zwischen diesen Extremen generieren zu können. Das Ausmaß der Anpassung kann dabei von dem Akzeptanzwert abhängig sein. Zeigt sich beispielsweise während des vorbestimmten Zeitraums kontinuierlich eine große Abweichung zwischen dem tatsächlichem Verlauf von dem Sollverlauf und somit ein geringer Akzeptanzwert, so kann dies darauf zurückgeführt werden, dass der empfangene Sollverlauf von einem Fahrer als unangemessen empfunden wird. Um die Akzeptanz des Benutzers zu steigern, kann es in diesem Fall vorgesehen sein, den Sollverlauf stärker an den erwarteten weiteren tatsächlichen Verlauf anzupassen. Lässt der Akzeptanzwert dagegen darauf schließen, dass der Benutzer versucht, den Sollverlauf zu erreichen, so kann dies bedeuten, dass der Sollverlauf von dem Benutzer akzeptiert wird und keine Anpassung des Sollverlaufs an den erwarteten weiteren tatsächlichen Verlauf erforderlich ist. Dies kann der Fall sein, wenn die Abweichung innerhalb des vorbestimmten Zeitraums abnimmt und der Akzeptanzwert über einem vorbestimmten Schwellenwert liegt.

Durch die Erfindung ergibt sich der Vorteil, dass die Mentorenvorrichtung auf einen Lernprozess des Benutzers eingehen kann, um somit die Akzeptanz der Mentorenvorrichtung durch den Benutzer zu erhöhen.

Zu der Erfindung gehören auch optionale Weiterbildungen, durch deren Merkmale sich zusätzliche Vorteile ergeben.

Eine Weiterbildung der Erfindung sieht vor, dass in der Mentorenvorrichtung mehrere Unterstützungsprofile bereitgestellt sind, wobei sich die Unterstützungsprofile zumindest in einer Eingriffsintensität, umfassend eine maximal zugelassenen Abweichung und eine Art des Eingriffs, voneinander unterscheiden. Die Mentorenvorrichtung ist dazu eingerichtet, aus den Unterstützungsprofilen, in Abhängigkeit von dem Akzeptanzwert eines ihrer Unterstützungsprofile als das aktive Unterstützungsprofil auszuwählen.

Das aktive Unterstützungsprofil ist eines von mehreren Unterstützungsprofilen, welche in der Mentorenvorrichtung gespeichert sind. Die Unterstützungsprofile unterscheiden sich voneinander in der Art des Eingriffs oder in der maximal zugelassenen Abweichung. Die Auswahl des aktiven Unterstützungsprofils ist dabei abhängig von dem Akzeptanzwert.

Es kann vorgesehen sein, das Eingriffsverhalten der Mentorenvorrichtung an den Benutzer anzupassen. Das Eingriffsverhalten kann hierfür in den Unterstützungsprofilen gespeichert sein. Das Unterstützungsprofil kann beispielsweise einen Umfang einer maximalen Beeinflussung der Stellgröße, die Art der anzupassenden Stellgrößen und erlaubte Abweichungen beziehungsweise Toleranzen einer aktuellen Abweichung von dem Sollverlauf vorgeben, ab welchem ein Eingriff durch die Mentorenvorrichtung erfolgt. Dabei können die Unterstützungsprofile unterschiedliche Intensitäten des Eingriffs definieren, welche beispielsweise einen Maximalwert umfassen können, welcher einer Stellgröße durch die Mentorenvorrichtung hinzugefügt werden kann. So kann es beispielsweise vorgesehen sein, dass ein Unterstützungsprofil schon bei geringen Abweichungen ein Eingreifen der Mentorenvorrichtung vorgibt. Dies kann beispielsweise bei einem Fahranfänger vorgesehen sein. Ein Unterstützungsprofil, welches einem fortgeschrittenem Fahrer zugeordnet sein kann, kann vorgeben, dass Eingriffe durch die Mentorenvorrichtung nur bei groben Abweichungen des Benutzers von dem Sollverlauf erfolgen. Basierend auf dem Akzeptanzwert kann die Mentorenvorrichtung ein bestimmtes Unterstützungsprofil auswählen. So kann es beispielsweise vorgesehen sein, dass ein geringer Akzeptanzwert auf eine geringe Erfahrung des Benutzers zurückzuführen sein kann, wodurch eine stärkere Unterstützung des Fahrers notwendig sein kann. Bei einem erfahrenen Nutzer kann dies bedeuten, dass ein Unterstützungsprofil ausgewählt werden kann, welches beispielsweise keine Eingriffe durch die Mentorenvorrichtung vorsieht. Somit kann für jeden Benutzer das in einer aktuellen Situation oder für seinen Lernerfolg notwendige Unterstützungsprofil ausgewählt werden. Ein jeweiliges Unterstützungsprofil kann einen zugewiesenen Wertebereich für den Akzeptanzwert umfassen, wobei die Mentorenvorrichtung dazu eingerichtet sein kann, das Unterstützungsprofil auszuwählen, in dessen Wertebereich der berechnete Akzeptanzwert liegt.

Eine Weiterbildung der Erfindung sieht vor, dass das aktive Unterstützungsprofile einen jeweiligen Adaptionswert aufweist, welcher eine maximale Annäherung des Sollverlaufs an den erwarteten weiteren tatsächlichen Verlauf beschreibt.

Mit anderen Worten umfasst das jeweilige Unterstützungsprofil einen jeweiligen Adaptionswert, welcher eine maximale Annäherung des Sollverlaufs an den erwarteten tatsächlichen Verlauf beschreibt.

Dadurch ergibt sich der Vorteil, dass ein Ausmaß der Anpassung des Sollverlaufs an den erwarteten tatsächlichen Verlauf in dem aktiven Unterstützungsprofil festgelegt werden kann.

Es kann beispielsweise vorgesehen sein, dass der Adaptionswert einen maximalen Abstand des angepassten Sollverlaufs zum empfangenen Sollverlauf definiert. Dabei kann ein Unterstützungsprofil, welches für einen Fahranfänger vorgesehen ist, beispielsweise einen Adaptionswert nah am Extrem des unveränderten Sollverlaufs aufweisen somit einen kleineren Abstand vorgeben als ein Unterstützungsprofil für einen erfahrenen Fahrer. Die Mentorenvorrichtung kann dazu eingerichtet sein gemäß dem Adaptionswert den Sollverlauf an den erwarteten tatsächlichen Verlauf anzunähern. Das aktive Unterstützungsprofil kann den jeweiligen Adaptionswert vorgeben, ohne dass dafür zuerst der Akzeptanzwert des Fahrers beobachtet wird.

Eine Weiterbildung der Erfindung sieht vor, dass die Mentorenvorrichtung eine Ausgabevorrichtung umfass, welche dazu eingerichtet ist, optische, akustische und/oder haptische Signale an den Benutzer auszugeben, welche den Sollverlauf vermitteln. Mit anderen Worten umfasst die Mentorenvorrichtung eine Ausgabevorrichtung, welche den Benutzer mittels einer Ausgabe von optischen, akustischen oder haptischen Signalen über den Sollverlauf informiert.

Dadurch ergibt sich der Vorteil, dass der Benutzer über den Sollverlauf in Kenntnis gesetzt wird, sodass dieser eine Einhaltung des Sollverlaufs durchführen kann.

Es kann beispielsweise vorgesehen sein, dass die Mentorenvorrichtung eine als Modul einer Medienwiedergabevorrichtung vorgesehene Ausgabevorrichtung umfasst, welche beispielsweise optische Signale wie Einblendungen auf einem Head-up-Display oder einem Bildschirm des Fahrzeugs wiedergeben kann, auf denen der Verlauf einer Solltrajektorie angezeigt werden kann. Alternativ dazu können beispielsweise durch die Ausgabevorrichtung Sprachanweisungen oder weitere akustische Signale über Lautsprecher eines Kraftfahrzeugs wiedergegeben werden. So kann beispielsweise die Lautstärke des akustischen Signals proportional zu einer durch den Sollverlauf vorgegebene Sollverzögerung sein. Die Ausgabevorrichtung kann beispielsweise auch eine haptische Vorrichtung eines Lenkrads aufweisen, welche haptische Signale in Form von Vibrationen oder richtungsführenden Lenkmomenten an dem Lenkrad ausgibt, welche abhängig sein können von einem durch den Sollverlauf eingegebenen Einschlagwinkel des Lenkrads.

Eine Weiterbildung der Erfindung sieht vor, dass die Ausgabevorrichtung dazu eingerichtet ist, optische und/oder akustische und/oder haptische Anweisungssignale zur Reduktion der Abweichung an den Benutzer auszugeben, welche abhängig sind von einer aktuellen Abweichung von dem Sollverlauf.

Mit anderen Worten ist die Ausgabevorrichtung dazu eingerichtet, die optischen, haptischen oder die akustischen Anweisungssignale in Abhängigkeit der aktuellen Abweichung des tatsächlichen Verlaufs von dem Sollverlauf auszugeben. Die Anweisungssignale umfassen Anweisungen, welche bei einem Befolgen zu einer Reduktion der Abweichung führen.

Dadurch ergibt sich der Vorteil, dass der tatsächliche Verlauf durch die Anweisungssignale dem Sollverlauf angenähert werden kann, indem der Benutzer mittels der Anweisungen zurückgeführt werden kann.

So kann es beispielsweise vorgesehen sein, dass durch die Ausgabevorrichtung Anweisungen wie beispielsweise ein akustisches Anweisungssignal, welches ein durchzuführendes Bremsmanöver anfordert, ausgegeben werden, damit der Benutzer dem Sollverlauf näher kommt. Es kann auch vorgesehen sein, dass beispielsweise Anweisungssignale in Form von Pfeilen, welche mittels des Head-up-Displays angezeigt werden, den Benutzer auf die Richtung des Sollverlaufs hinweisen.

Eine Weiterbildung der Erfindung sieht vor, dass die Mentorenvorrichtung dazu eingerichtet ist, einen Sicherheitswert zur Bewertung einer aktuellen Fahrsituation zu berechnen und bei einem Überschreiten eines vorbestimmten Sicherheitsschwellenwertes ein vorbestimmtes Unterstützungsprofil als das aktive Unterstützungsprofil auszuwählen.

Mit anderen Worten ist die Mentorenvorrichtung dazu eingerichtet, das vorbestimmte Unterstützungsprofil als das aktive Unterstützungsprofil auszuwählen, wenn anhand der Bewertung einer aktuellen Fahrsituation ein Wert berechnet wird, welcher den vorbestimmten Sicherheitsschwellenwert überschreitet.

Dadurch ergibt sich der Vorteil, dass die Mentorenvorrichtung auf riskante Situationen reagieren kann und in diesem Fall ein Unterstützungsprofil wählen kann, welches beispielsweise einen stärkeren Eingriff durch die Mentorenvorrichtung vorsieht.

Es kann beispielsweise vorgesehen sein, dass durch die Mentorenvorrichtung die Möglichkeit besteht, den Sicherheitswert zu berechnen, wobei dieser auf Grundlage eines Abstands zu einer Fahrbahn oder den Prognosen eines Modells, welches einen zukünftigen Verlauf des Fahrzeugs beschreibt, berechnet werden können. Wenn beispielsweise der vorbestimmte Sicherheitsschwellenwert überschritten wird, was beispielsweise auf einen zu geringen Abstand zu einem Fahrbahnrand hervorgerufen werden kann, kann es vorgesehen sein, dass das vorbestimmte Unterstützungsprofil als das aktive Unterstützungsprofil ausgewählt wird, welches einen maximalen Eingriff der Mentorenvorrichtung vorsieht. In dieser Situation kann dann beispielsweise vorgesehen sein, dass die Kontrolle über die Handhabung vollständig durch die Mentorenvorrichtung erfolgt und der Benutzer keinen Einfluss auf die Handhabung hat.

Eine Weiterbildung der Erfindung sieht vor, dass das bei Überschreiten des Sicherheitsschwellenwertes auszuwählende Unterstützungsprofil, der Sicherheitsschwellenwert und/oder der Akzeptanzwert einem jeweiligen Benutzer zugeordnet ist.

Mit anderen Worten ist die Mentorenvorrichtung dazu eingerichtet, einem Benutzer einen jeweiligen Sicherheitsschwellenwert, das bei dem Überschreiten des Sicherheitsschwellenwertes auszuwählende Unterstützungsprofil und/oder den Akzeptanzwert individuell zuzuordnen.

Dadurch ergibt sich der Vorteil, dass die Mentorenvorrichtung durch verschiedene Benutzer verwendet werden kann und an jeden einzelnen Benutzer angepasst werden kann.

Es kann beispielsweise vorgesehen sein, dass der jeweilige Benutzer bei einer Benutzung der Mentorenvorrichtung mittels einer Benutzereingabe oder einer automatischen Erfassung identifiziert werden kann. Nach der Identifikation kann beispielsweise der Sicherheitsschwellenwert, der Akzeptanzwert und/oder das auszuwählende Unterstützungsprofil bei einem Überschreiten des Sicherheitsschwellenwertes abgerufen werden. Es kann beispielsweise vorgesehen sein, dass für jeden einzelnen Benutzer ein Verlauf der Abweichung protokolliert wird und ein spezifischer Sicherheitsschwellenwert festgelegt ist. So kann einem unsicheren Fahrer beispielsweise ein geringerer Sicherheitsschwellenwert zugeordnet werden.

Eine Weiterbildung der Erfindung sieht vor, dass die Mentorenvorrichtung eine Eingabevorrichtung aufweist, welche dazu eingerichtet ist, das aktive Unterstützungsprofil in Abhängigkeit einer Benutzereingabe unabhängig von dem Akzeptanzwert vorzugeben.

Mit anderen Worten weist die Mentorenvorrichtung die Eingabevorrichtung auf. Die Eingabevorrichtung ist dazu eingerichtet, Benutzereingaben des Benutzers zu erfassen und in Abhängigkeit dieser Benutzereingabe das aktive Unterstützungsprofil der Mentorenvorrichtung auszuwählen, wobei die Auswahl das Unterstützungsprofils unabhängig von dem Akzeptanzwert ist, welcher ermittelt wurde.

Durch die Weiterbildung ergibt sich der Vorteil, dass ein Benutzer ein Unterstützungsprofil manuell auswählen kann, um beispielsweise bei einer als unangemessen bewerteten Auswahl eines aktuellen Unterstützungsprofils eingreifen zu können.

Es kann beispielsweise vorgesehen sein, dass die Mentorenvorrichtung einen Touchscreen aufweist, welcher die Eingabevorrichtung darstellt. Auf diesem können beispielsweise Informationen über die möglichen Unterstützungsprofile angezeigt werden, wobei bei einer Benutzereingabe in Form eines Berührens eines Symbols, welches ein vorbestimmtes Unterstützungsprofil beschreibt, das entsprechende Unterstützungsprofil als aktives Unterstützungsprofil in der Mentorenvorrichtung eingestellt wird. Der manuellen Auswahl des Unterstützungsprofils kann eine höhere Priorität zugeordnet sein, sodass es das aufgrund des Akzeptanzwerts eingestellten Unterstützungsprofil überschreibt.

Eine Weiterbildung der Erfindung sieht vor, dass die Eingabevorrichtung dazu eingerichtet ist, ein Unterstützungsprofil in Abhängigkeit der Benutzereingabe zu verändern oder zu erzeugen.

Mit anderen Worten ist die Eingabevorrichtung dazu eingerichtet, die Benutzereingaben zu erfassen und in Abhängigkeit der Benutzereingaben das Unterstützungsprofil zu verändern oder zu erzeugen.

Dadurch ergibt sich der Vorteil, dass ein Unterstützungsprofil nach den Bedürfnissen des Benutzers erzeugt werden kann.

Es kann beispielsweise vorgesehen sein, dass Parameter eines Unterstützungsprofils auf der Eingabevorrichtung angezeigt werden und der Benutzer beispielsweise mittels Berühren virtueller Tasten oder eines Verschiebens virtueller Balken einzelne Parameter wie beispielsweise Eingriffsschwellenwerte oder durch die Mentorenvorrichtung zu beeinflussende Stellgrößen verändern kann. Die Veränderungen können beispielsweise in einem bereits vorhandenen Unterstützungsprofil gespeichert werden oder es kann ein neues Unterstützungsprofil erstellt und in der Mentorenvorrichtung gespeichert werden.

Eine Weiterbildung der Erfindung sieht vor, dass das Gerät ein Kraftfahrzeug ist und der Sollverlauf eine Fahrtrajektorie und der Eingriff eine Änderung einer Längssteuerung und/oder einer Quersteuerung umfasst.

Mit anderen Worten ist die Mentorenvorrichtung eine Mentorenvorrichtung zum Assistieren des Benutzers bei der Handhabung eines Fahrzeugs. Der Sollverlauf ist eine Fahrtrajektorie des Kraftfahrzeugs und die Eingriffe umfassen Änderungen der Lenksteuerung und/oder der Quersteuerung des Kraftfahrzeugs.

Dadurch ergibt sich der Vorteil, dass die Mentorenvorrichtung als elektronischer Fahrlehrer verwendet werden kann, um ein Fahrverhalten eines Fahrers optimieren zu können.

Es kann beispielsweise vorgesehen sein, dass die Mentorenvorrichtung ein Fahrerassistenzsystem ist, welches an die Lenksteuerung und/oder die Quersteuerung des Kraftfahrzeugs angeschlossen ist. Die Mentorenvorrichtung kann auch an die Fahrzeugsensorik angeschlossen sein, um eine Vielzahl von Stellgrößen zu erfassen und beispielsweise die Position eines Fahrzeugs auf der Fahrbahn zu bestimmen. Die Mentorenvorrichtung kann beispielsweise Abweichungen einer Geschwindigkeit, einer Beschleunigung oder einer Position des Kraftfahrzeugs im Vergleich zu der Solltrajektorie ermitteln und basierend auf dem Unterstützungsprofil in die Lenksteuerung und/oder die Quersteuerung eingreifen. Es kann beispielsweise vorgesehen sein, dass die Mentorenvorrichtung derart in die Lenksteuerung eingreift, dass eine vorbestimmte Geschwindigkeit durch das Kraftfahrzeug nicht überschritten wird.

Eine Weiterbildung der Erfindung sieht vor, dass die Mentorenvorrichtung dazu eingerichtet ist, das Kraftfahrzeug bei einem Überschreiten des Sicherheitsschwellenwertes entlang einer Rückführtrajektorie auf den Sollverlauf der Fahrtrajektorie zurückzuführen.

Mit anderen Worten wird das Kraftfahrzeug durch die Mentorenvorrichtung auf die Solltrajektorie zurückgeführt, wenn der Sicherheitsschwellenwert überschritten wird.

Dadurch ergibt sich der Vorteil, dass das Kraftfahrzeug automatisch in einen ungefährdeten Bereich zurückgeführt wird, um die Sicherheit zu erhöhen.

Es kann beispielsweise vorgesehen sein, dass die Mentorenvorrichtung in regelmäßigen Abständen Rückführtrajektorien berechnet, welche das Kraftfahrzeug ausgehend von einer aktuellen Position zurück auf den Sollverlauf der Fahrtrajektorie zurückführt. Sobald ein Wert berechnet wird, welcher die Sicherheit beschreibt, welcher den Sicherheitsschwellenwert überschreitet, kann die Mentorenvorrichtung dazu eingerichtet sein, das Kraftfahrzeug mittels des aktiven Unterstützungsprofils entlang der Rückführtrajektorie auf die Fahrtrajektorie zurückzuführen. Mittels der Rückführung kann eine stabile Fahrt des Kraftfahrzeugs entlang der Fahrtrajektorie ermöglicht werden.

Eine Weiterbildung der Erfindung sieht vor, dass die Mentorenvorrichtung eine zusätzliche Regelung der Eingriffsintensität umfasst, welche dazu eingerichtet ist, die Eingriffsintensität des aktiven Unterstützungsprofils in Abhängigkeit des aktuellen Sicherheitswerts anzupassen.

Mit anderen Worten ist die Regelung der Eingriffsintensität dazu eingerichtet, eine durch das aktive Unterstützungsprofil vorgegebene Eingriffsart und eine maximale Abweichung in Abhängigkeit des aktuellen Sicherheitswertes anzupassen.

Dadurch ergibt sich der Vorteil, dass auf fahrkritische Situationen reagiert werden kann, ohne das aktive Unterstützungsprofil wechseln zu müssen.

Es kann beispielsweise vorgesehen sein, dass das aktive Unterstützungsprofil einen maximalen Wert vorgibt, welcher durch die Mentorenvorrichtung angepasst werden kann. Die Mentorenvorrichtung kann beispielsweise einen Faktor bestimmen, welcher proportional zu dem Sicherheitswert ist und diesen mit dem Maximalwert multiplizieren. So kann es beispielsweise vorgesehen sein, dass der Maximalwert mit dem Faktor 1,5 multipliziert wird, wenn der Sicherheitswert einen ersten vorbestimmten Sicherheitswert überschreitet und der Maximalwert mit einem Faktor 2 multipliziert wird, wenn der Sicherheitswert einen zweiten vorbestimmten Sicherheitswert überschreitet.

Eine Weiterbildung der Erfindung sieht vor, dass die Mentorenvorrichtung dazu eingerichtet ist, den Sicherheitswert in Abhängigkeit des erwarteten weiteren tatsächlichen Verlaufs zu berechnen.

Mit anderen Worten ist die Mentorenvorrichtung dazu eingerichtet, basierend auf den vergangenen Abweichungen vom Sollverlauf über einen vorbestimmten Zeitraum den erwarteten weiteren tatsächlichen Verlauf zu berechnen und den Sicherheitswert in Abhängigkeit des weiteren tatsächlichen Verlaufs zu bestimmen.

Durch die Erfindung ergibt sich der Vorteil, dass die Mentorenvorrichtung präventiv eingreifen kann, bevor sich eine sicherheitskritische Situation ergibt.

Es kann beispielsweise vorgesehen sein, dass die Mentorenvorrichtung das Abweichverhalten des Benutzers bezogen auf den Sollverlauf protokolliert und das Benutzermodell erstellt, wobei das Benutzermodell Parameter umfassen kann, welche das Abweichverhalten beschreiben. Mittels dieser Parameter des Benutzermodells kann es möglich sein, das vergangene Abweichverhalten anzunähern und auf Grundlage des Benutzermodells ein zukünftiges Abweichverhalten vorherzusagen. Wird mittels einer Extrapolation auf Grundlage des Benutzermodells ein weiterer tatsächlicher Verlauf erzeugt, welche zu einem zukünftigen Zeitpunkt einen vorbestimmten kritischen Bereich betritt, kann es vorgesehen sein, dass der Sicherheitswert angepasst wird und somit ein Unterstützungsprofil zu wechseln, wenn der Sicherheitsschwellenwert überschritten wird. Somit kann beispielsweise das Unterstützungsprofil gewechselt werden, bevor die sicherheitskritische Situation eingetreten ist.

Ein weiterer Vorteil des erstellten Benutzermodells ergibt sich daraus, dass der zukünftige Sollverlauf an den Fahrer individuell angepasst werden kann, vorausgesetzt diese Anpassung ist nicht vollständig im Konflikt mit dem zu erlernenden Sollverlauf oder den Anforderungen an Sicherheit.

Eine Weiterbildung der Erfindung sieht vor, dass die Mentorenvorrichtung dazu eingerichtet ist, das Kraftfahrzeug entlang der Fahrtrajektorie vollautomatisiert zu führen.

Mit anderen Worten ist die Mentorenvorrichtung dazu eingerichtet, das Kraftfahrzeug derart zu steuern, dass es ohne eine Einwirkung durch den Benutzer die Fahrtrajektorie verfolgen kann.

Dadurch ergibt sich der Vorteil, dass ein Vorführmodus bereitgestellt wird und dem Benutzer des Fahrzeugs der Sollverlauf vorgeführt werden kann.

Die Erfindung umfasst auch ein Verfahren zum Assistieren eines Benutzers bei der Handhabung eines vorbestimmten Objekts mittels einer Mentorenvorrichtung, wobei durch die Mentorenvorrichtung ein Sollverlauf der Handhabung, der dem Benutzer durch die Mentorenvorrichtung vermittelt werden soll, empfangen wird. Durch die Mentorenvorrichtung wird eine aktuelle Abweichung eines tatsächlichen Verlaufs der Handhabung, wie sie der Benutzer durchführt, von dem Sollverlauf ermittelt. Gemäß einem aktiven Unterstützungsprofil wird durch die Mentorenvorrichtung ein Eingriff in die Handhabung zur Reduktion der Abweichung durchgeführt. Durch die Mentorenvorrichtung wird ein Akzeptanzwert ermittelt, welcher ein Abweichverhalten des Benutzers betreffend vergangener Abweichungen vom Sollverlauf über einen vorbestimmten Zeitraum beschreibt. In Abhängigkeit von dem Akzeptanzwert wird der Sollverlauf dem anhand des Abweichverhaltens ermittelten, erwarteten weiteren tatsächlichen Verlauf angenähert.

In der Mentorenvorrichtung können mehrere Unterstützungsprofile bereitgestellt werden, wobei sich die Unterstützungsprofile zumindest in einer Eingriffsintensität, umfassend eine maximal zugelassenen Abweichung oder eine Art des Eingriffs, voneinander unterscheiden und die Mentorenvorrichtung aus den Unterstützungsprofilen eines der Unterstützungsprofile als das aktive Unterstützungsprofil auswählt.

Die Erfindung umfasst auch ein Kraftfahrzeug mit einer Mentorenvorrichtung. Bei dem Kraftfahrzeug kann es sich beispielsweise um ein Personenkraftwagen oder einen Lastkraftwagen handeln.

Zu der Erfindung gehören auch Weiterbildungen des erfindungsgemäßen Verfahrens, die Merkmale aufweisen, wie sie bereits im Zusammenhang mit den Weiterbildungen der erfindungsgemäßen Mentorenvorrichtung beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschrieben. Hierzu zeigt:
- Fig. 1: einen möglichen Verlauf des Verfahrens zum Assistieren eines Benutzers;
- Fig. 2: ein mögliches Auswahlverfahren des aktiven Unterstützungsprofils durch die Mentorenvorrichtung;
- Fig. 3: einen möglichen Regelkreis der Mentorenvorrichtung ; und
- Fig. 4: eine mögliches Ausführungsform der Mentorenvorrichtung;

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden.

In den Figuren sind funktionsgleiche Elemente jeweils mit denselben Bezugszeichen versehen.

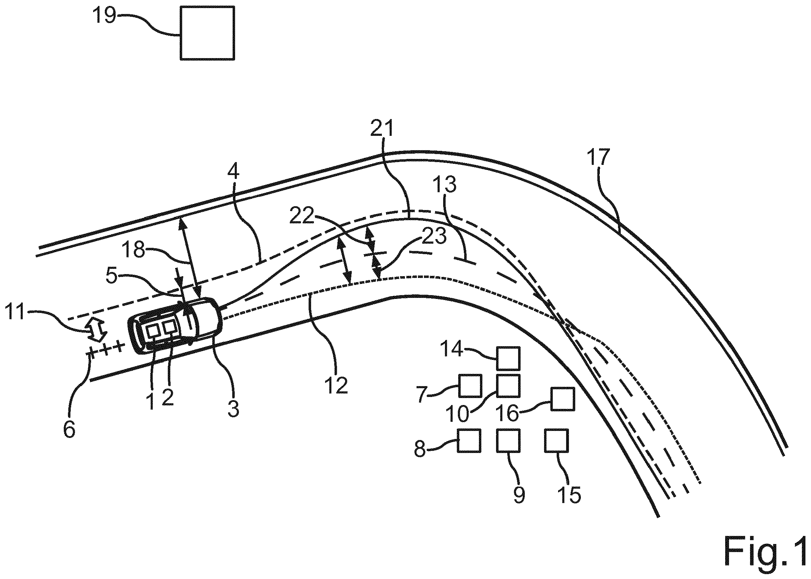

Fig. 1 zeigt einen möglichen Verlauf eines Verfahrens zum Betreiben der Mentorenvorrichtung 1 zum Assistieren des Benutzers 2 bei der Handhabung des vorbestimmten Objekts 3. Bei der Mentorenvorrichtung 1 kann es sich beispielsweise um ein Fahrassistenzsystem handeln, welches zum Assistieren des Benutzers 2 bei der Handhabung eines Fahrzeugs eingerichtet ist. Der Sollverlauf 4 der Handhabung kann beispielsweise eine Trajektorie sein, entlang derer das Fahrzeug geführt werden soll. Bei dem Sollverlauf 4 kann es sich um den Verlauf einer Fahrlinie handeln, welche der Benutzer 2 verfolgen soll. Der Sollverlauf 4 kann beispielsweise durch eine Sollverlaufsbestimmungseinheit erstellt und durch die Mentorenvorrichtung 1 empfangen worden sein. Die Mentorenvorrichtung 1 kann dazu eingerichtet sein, die aktuelle Abweichung 5 des Objekts 3 von dem Sollverlauf 4 zu bestimmen. Bei dem tatsächlichen Verlauf 6 kann es sich um einen örtlichen Verlauf handeln oder auch um einen Verlauf einer Geschwindigkeit, die eine Längsgeschwindigkeit und eine Quergeschwindigkeit umfasst. Die Mentorenvorrichtung 1 kann dazu eingerichtet sein, den tatsächlichen Verlauf 6 der Handhabung, wie sie der Benutzer 2 durchführt, zu protokollieren. Mittels eines Vergleichs des tatsächlichen Verlaufs 6 und des Sollverlaufs 4 über einen vorbestimmten Zeitraum kann die vergangene Abweichung 11 über den vorbestimmten Zeitraum erfasst werden und das Abweichverhalten 10 durch die Mentorenvorrichtung 1 bestimmt werden. Aus dem Abweichverhalten 10 kann der Akzeptanzwert 9 bestimmt werden. Der Akzeptanzwert 9 kann beispielsweise ein Kooperationsverhalten des Benutzers 2 mit der Mentorenvorrichtung 1 darstellen. Auf Grundlage des Abweichverhaltens 10 kann der weitere tatsächliche Verlauf 12 durch die Mentorenvorrichtung 1 prognostiziert werden. Dieser kann ein anzunehmender Verlauf sein, welchem der Benutzer 2 wahrscheinlich folgen wird. In Abhängigkeit von dem Akzeptanzwert 9 kann die Mentorenvorrichtung 1 den vorgegebenen Sollverlauf 4 dem erwarteten tatsächlichen weiteren Verlauf 12 annähern und somit den angenäherten Sollverlauf 13 berechnen. Der angenäherte Sollverlauf 13 kann letztlich auch zurück auf den Sollverlauf 4 führen, damit der Fahrer diesen erlernen kann.

In der Mentorenvorrichtung 1 können mehrere Unterstützungsprofile 8 gespeichert sein, welche den Adaptionswert 15 und die Eingriffsintensität 16 definieren können. Aus diesen Unterstützungsprofilen 14 kann die Mentorenvorrichtung 1 in Abhängigkeit von dem Akzeptanzwert 9 das aktive Unterstützungsprofil 8 auswählen. Die Mentorenvorrichtung 1 kann dazu eingerichtet sein, beispielsweise einen Fahrbahnrand 17 zu erfassen und einen Sicherheitsabstand 18, welcher einen Abstand des Kraftfahrzeugs 3 von dem Fahrbahnrand 17 beschreibt, zu berechnen. In Abhängigkeit des Sicherheitsabstands 18 kann die Mentorenvorrichtung 1 den Sicherheitswert 19 berechnen. Dieser Sicherheitswert 19 kann ein Maß für eine Gefährdungslage in einer aktuellen Situation sein. In der Mentorenvorrichtung 1 kann ein Sicherheitsschwellenwert 20 gespeichert sein, welcher ein Schwellenwert für den Sicherheitswert 19 sein kann und bei einem Überschreiten zu einer Auswahl eines vorbestimmten Unterstützungsprofils 14 führen kann. Alternativ dazu kann es auch möglich sein, dass bei einem Überschreiten des Sicherheitsschwellenwertes 20 die Eingriffsintensität 16, welche durch das aktive Unterstützungsprofil 7 ausgewählt ist, angepasst wird. Es kann beispielsweise vorgesehen sein, dass ein Ausmaß der Einflussmöglichkeit des Benutzers 2 abhängig ist von dem aktuellen Sicherheitswert 19 und beispielsweise bei einem Überschreiten des Sicherheitsschwellenwerts 20 eine Entkopplung des Benutzers 2 von dem Objekt 3 durch die Mentorenvorrichtung 1 durchgeführt wird. Es kann beispielsweise vorgesehen sein, dass beim Überschreiten des Sicherheitsschwellenwertes 20 ein vorbestimmtes Unterstützungsprofil 14 als das aktive Unterstützungsprofil 7 durch die Mentorenvorrichtung 1 ausgewählt wird und das Kraftfahrzeug vollautomatisiert entlang der Rückführtrajektorie 21 auf den Sollverlauf 4 zurückgeführt wird. Der Sollverlauf 4 und die Rückführtrajektorie 21 können zumindest abschnittsweise aufeinanderliegen. Der angenäherte Sollverlauf 13 kann in Abhängigkeit des Akzeptanzwertes 9, des Adaptionswerts 15 oder des Sicherheitswertes 19 näher an den empfangenen Sollverlauf 4 oder an den weiteren tatsächlichen Verlauf 12 angenähert werden. Es kann beispielsweise vorgesehen sein, dass bei relativ geringen Sicherheitswerten 19 der Abstand 22 des angenäherten Sollverlaufs 13 zum Sollverlauf 4 kleiner ist als der Abstand 23 des angenäherten Sollverlaufs 13 zum weiteren tatsächlichen Verlauf 12. Ein jeweiliges Unterstützungsprofil 14 kann die maximale erlaubte Abweichung 5 des Objekts 3 oder des tatsächlichen Verlaufs 6 von dem Sollverlauf 4 definieren und/oder die Art des Eingriffs 8 der Mentorenvorrichtung 1. Handelt es sich bei dem Objekt 3 beispielsweise um ein Kraftfahrzeug, kann die maximale Abweichung 5 beispielsweise eine maximale örtliche Abweichung des tatsächlichen Verlaufs 6 von dem Sollverlauf 4 oder eine maximale Abweichung 5 einer aktuellen Geschwindigkeit von einer Sollgeschwindigkeit sein. Die Art des Eingriffs kann beispielsweise einen maximalen Wert des Eingriffes 8 der Mentorenvorrichtung 1 definieren. Es kann auch vorgesehen sein, dass die Art des Eingriffs auch die anzupassenden Stellgrößen beschreiben kann. So kann beispielsweise vorgesehen sein, dass in der Art des Eingriffs definiert ist, ob die Mentorenvorrichtung 1 in die Lenksteuerung und/oder die die Quersteuerung des Fahrzeugs 13 eingreift.

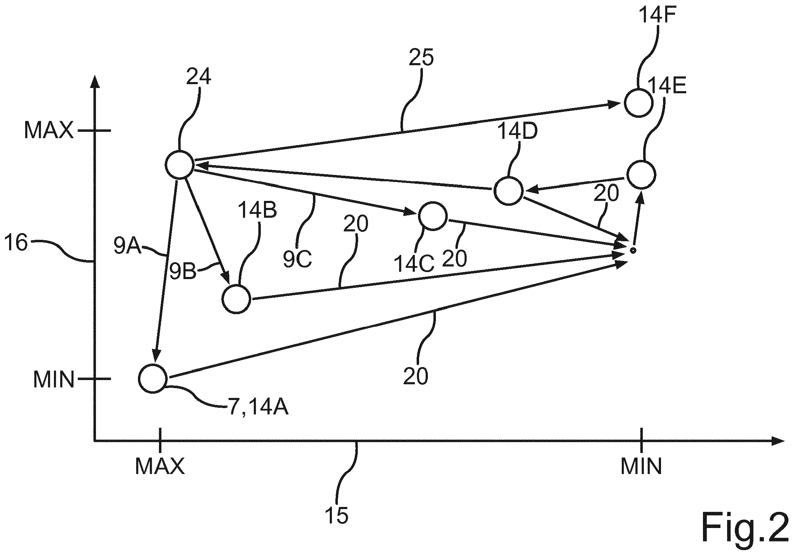

Fig. 2 zeigt ein mögliches Auswahlverfahren des aktiven Unterstützungsprofils 7 durch die Mentorenvorrichtung 1. Die Fig. 2 zeigt ein Diagramm, wobei entlang der Abszissenachse der Adaptionswert 15 zur Anpassung der Sollvorgabe angezeigt wird, welche das Ausmaß der maximalen Anpassung beschreibt. Die gezielte Veränderung des Adaptionswert 15 beschreibt ein Konzept zur Auslegung von Fahrassistenzsystemen. Dieser kann als variabler Freiheitsgrad interpretiert werden und gibt ein Maß an, in welchem Umfang die Mentorenvorrichtung 1 auf die Handhabung des Benutzers 2 eingeht. Ein niedriger Adaptionswert 15 bedeutet eine maximale Adaption an die Wünsche des Benutzers 2. Bei einem minimalen Adaptionswert 15 kann beispielsweise der angenäherte Sollverlauf 13 mit dem prognostizierten weiteren tatsächlichen Verlauf 12 übereinstimmen. Die Mentorenvorrichtung 1 zeigt in diesem Fall ein maximales Kooperationsverhalten gegenüber dem Benutzer 2. Ein maximaler Adaptionswert 15 beschreibt eine minimale Kooperation der Mentorenvorrichtung 1 mit dem Benutzer 2. Dies kann beispielsweise bedeuten, dass im Fall eines maximalen Adaptionswerts 15 der angenäherte Sollverlauf 13 mit dem vorgegebenen Sollverlauf 4 übereinstimmt. Die Ordinatenachse beschreibt das Ausmaß der Eingriffsintensität 16 der Mentorenvorrichtung 1. Eine minimale Eingriffsintensität 16 beschreibt eine manuelle Fahrt durch den Benutzer 2. Mit zunehmender Eingriffsintensität 16 erfolgt ein stärkerer Eingriff der Mentorenvorrichtung 1, indem beispielsweise mittels Warnhinweise Anweisungen an den Benutzer 2 ausgegeben werden können. Eine maximale Eingriffsintensität 16 stellt eine völlige Entkopplung des Benutzers 2 von dem Objekt 3 dar. In diesem Fall kann es sein, dass der Benutzer 2 keine Möglichkeit hat, mittels seiner Handhabung des Objekts 3 einen Einfluss auf das Objekt 3 auszuüben. Das Ausmaß des Adaptionswertes 15 und der Eingriffsintensität 16 kann durch die Unterstützungsprofile 14 vorgegeben sein. Ein Unterstützungsprofil 14A kann beispielsweise für einen erfahrenen Benutzer 2 vorgegeben sein. Das Unterstützungsprofil 14A zeigt eine minimale Eingriffsintensität 16 und einen minimalen Adaptionswert15. Es kann beispielsweise einem talentierten Fahrer zugeordnet sein, wobei der angenäherte Sollverlauf 13 mit dem weiteren tatsächlichen Verlauf 12 identisch ist und keine Eingriffe durch die Mentorenvorrichtung 1 erfolgen. Das Unterstützungsprofil 14B kann einem durchschnittlichen Fahrer zugeordnet sein. Das Unterstützungsprofil kann eine höhere Eingriffsintensität 16 aufweisen als das Unterstützungsprofil für einen erfahrenen Fahrer. Es kann beispielsweise vorgesehen sein, dass die Mentorenvorrichtung 1 Anweisungen an den Fahrer ausgibt, um ihn auf den Verlauf des Sollverlaufs 4 hinzuweisen. Der Adaptionswert 15 kann bei dem Profil 14B gegenüber dem Profil des erfahrenen Fahrers 14A erhöht sein. Es kann bedeuten, dass basierend auf dem Akzeptanzwert 9 der Sollverlauf 4 im weiteren tatsächlichen Verlauf 12 zur Erstellung des angenäherten Sollverlaufs 13 in einem bestimmten Umfang angenähert werden kann. Das Unterstützungsprofil 14C kann beispielsweise einem Fahranfänger zugeordnet sein. Es weist einen höheren Adaptionswert 15 als die beiden anderen Unterstützungsprofile auf. Dies bedeutet, dass die Mentorenvorrichtung 1 nur in einem geringen Ausmaß auf den Fahrerwillen eingeht und der angenäherte Sollverlauf 13 nur in einem geringen Umfang von dem vorgegebenen Sollverlauf 4 abweicht. Die Eingriffsintensität 16 kann für dieses Profil vorsehen, dass die Querführung des Objekts 3 durch den Benutzer 2 erfolgt, wohingegen die Längsführung des Objekts 3 durch die Mentorenvorrichtung 1 erfolgt. Die Eingriffsintensität 16 der Längsführung kann als dritte Dimension in diesem Diagramm eingezeichnet werden. Die Mentorenvorrichtung 1 kann dazu eingerichtet sein, in Abhängigkeit des Akzeptanzwertes 9 das entsprechende Unterstützungsprofil auszuwählen. Ein erster Akzeptanzwert 9A kann beispielsweise dem Unterstützungsprofil eines erfahrenen Fahrers 14A zugeordnet sein. Ein zweiter Akzeptanzwert 9B kann beispielsweise dem Unterstützungsprofil eines fortgeschrittenen Fahrers zugeordnet sein und ein Akzeptanzwert 9C einem Unterstützungsprofil eines Fahranfängers. In Abhängigkeit des Akzeptanzwertes 9 kann die Mentorenvorrichtung 1 das entsprechende Unterstützungsprofil 14 als das aktive Unterstützungsprofil 7 auswählen. Es kann vorgesehen sein, dass bei einem Überschreiten des Sicherheitsschwellenwertes 20 eine Veränderung des aktiven Unterstützungsprofils 7 erfolgt und ein vorbestimmtes Unterstützungsprofil 14E ausgewählt wird, welches beispielsweise nur in kritischen Situationen ausgewählt werden kann. Mit anderen Worten kann es vorgesehen sein, dass bei einem Überschreiten des Sicherheitsschwellenwertes 20 ein vorbestimmtes Unterstützungsprofil 14E als das aktive Unterstützungsprofil 7 ausgewählt wird. Es kann vorgesehen sein, dass im Fall eines sich anschließenden Unterschreitens des Sicherheitsschwellenwertes 20 ein vorbestimmtes Rückführungsunterstützungsprofil 14B ausgewählt werden kann, wobei das Fahrzeug im Rückführungszustand geführt wird. Es kann sein, dass dieses Unterstützungsprofil 14D verlassen wird, falls sich das Kraftfahrzeug über einen vorbestimmten Zeitraum entlang des Sollverlaufs 4 bewegt. In diesem Fall kann es vorgesehen sein, dass das System zu dem Ausgangspunkt 24 zurückgesetzt wird und in Abhängigkeit von dem Akzeptanzwert das entsprechende Unterstützungsprofil ausgewählt wird. Es kann vorgesehen sein, dass eine Auswahl des Unterstützungsprofils aufgrund einer Benutzereingabe erfolgen kann. Im Fall der Benutzereingabe 25 kann es vorgesehen sein, dass eine Auswahl aufgrund des Akzeptanzwertes 9 überstimmt wird. So ist es beispielsweise möglich, dass aufgrund einer Benutzereingabe 25 ein Unterstützungsprofil 14E ausgewählt werden kann, wobei es sich um einen Vorführmodus handeln kann, in welchem das Kraftfahrzeug vollautomatisiert geführt wird.

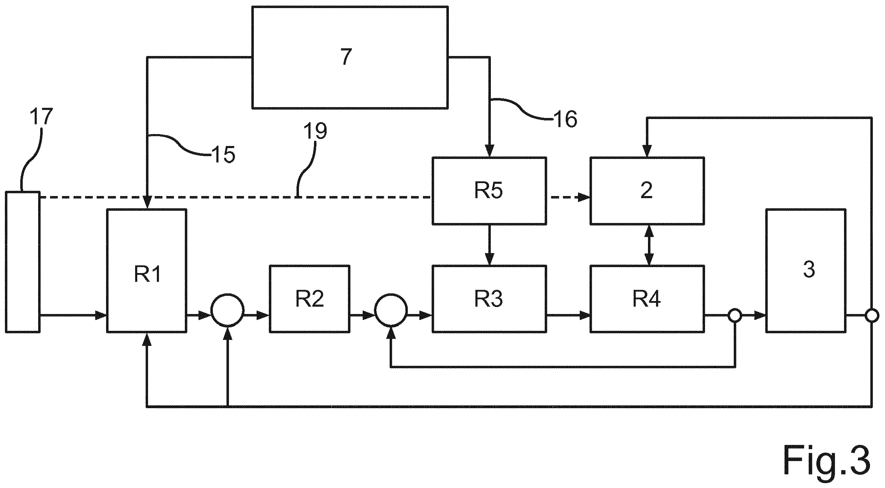

Fig. 3 zeigt eine mögliche Regelungsstruktur für die Mentorenvorrichtung. Bei dem Objekt 3 kann es sich beispielsweise um ein Fahrzeug handeln. Es kann vorgesehen sein, dass durch das aktive Unterstützungsprofil 7 ein Ausmaß einer Anpassung 15 des Sollverlaufs 4 an den weiteren tatsächlichen Verlauf 12 vorgegeben ist. Es kann vorgesehen sein, dass durch die Mentorenvorrichtung 1 der Fahrbahnrand 17 erfasst wird und darauf aufbauend ein Sicherheitswert 19 ermittelt wird. Mittels einer Bahnplanung R1 kann in Abhängigkeit des Fahrbahnrands 17 und des Adaptionswerts 15 der angenäherte Sollverlauf 13 erstellt werden. Dieser kann an die Fahrdynamikregelung R2 übermittelt werden, welche Anweisungen an eine Aktorikregelung R3 weiterleiten kann. Das aktive Unterstützungsprofil 7 kann die Art und das Ausmaß des Eingriffs 16 vorgeben, wobei dieser Wert durch eine zusätzliche Regelung der Eingriffsintensität R5, welche abhängig sein kann von dem berechneten Sicherheitswert 19 angepasst werden kann. Die Art und das Ausmaß der Eingriffsintensität 16 kann somit durch die Regelung der Eingriffsintensität R5 angepasst und der Aktorikregelung R3 übermittelt werden. Diese kann in die Lenkung und den Antriebsstrang des Fahrzeugs R4 eingreifen, wodurch ein Eingriff in die Handhabung des Objekts 3 durch die Mentorenvorrichtung 1 erfolgen kann. Weitere Eingriffe können durch den Benutzer 2 erfolgen, welcher somit weiterhin in die Handhabung des Objekts 3 eingreifen kann.

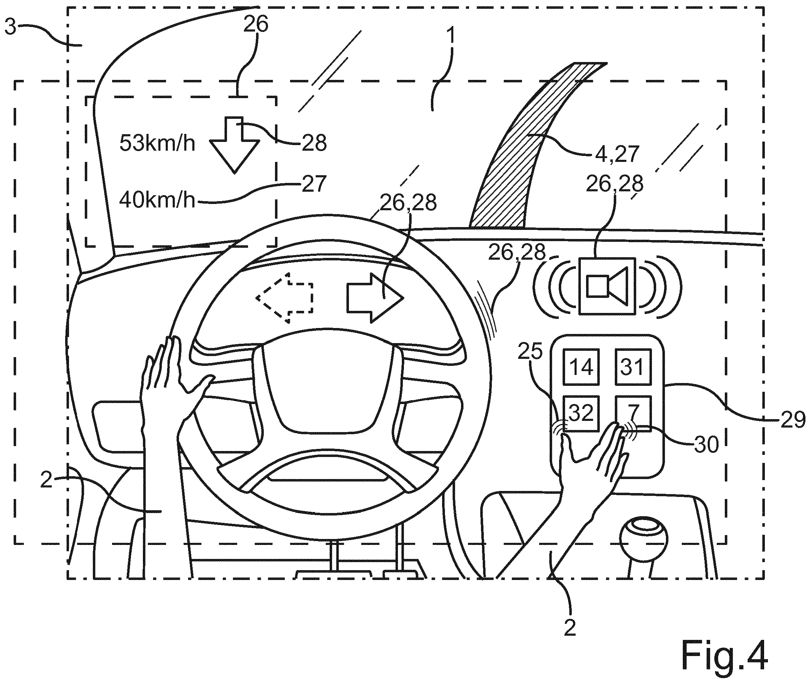

Fig. 4 zeigt eine mögliche Ausführungsform einer Mentorenvorrichtung 1. Die Mentorenvorrichtung 1 kann eine Ausgabevorrichtung 26 aufweisen, welche dazu eingerichtet sein kann, Signale 27 und Anweisungssignale 28 an den Benutzer 2 auszugeben. Die Signale 27 können optische, akustische oder haptische Signale sein, welche an den Benutzer 2 ausgegeben werden können, um diesen über den Sollverlauf 4 zu informieren. Es kann beispielsweise vorgesehen sein, dass die Ausgabevorrichtung 26 ein Head-up-Display umfasst, auf welchem eine durch den Sollverlauf 4 vorgegebene Geschwindigkeit mittels eines grafischen Objekts angezeigt werden kann. Der örtliche Sollverlauf 4 kann über das Head-up-Display in Form einer Linie, welche auf dem Head-up-Display eingeblendet werden kann, angezeigt werden. Die Ausgabevorrichtung 26 kann dazu eingerichtet sein, Anweisungssignale 28 an den Benutzer 2 auszugeben, welche die Reduktion der Abweichung 10 bewirken sollen. Dabei kann es sich beispielsweise um haptische Signale handeln, welche an einem Lenkrad eines Kraftfahrzeugs ausgegeben werden. Es können auch optische Anweisungssignale 28 in Form von Pfeilen auf einer Fahrzeugkonsole oder einem Head-up-Display angezeigt werden, welche den Benutzer 2 dazu auffordern können, in eine bestimmte Richtung zu lenken oder eine Geschwindigkeit anzupassen. Die Ausgabevorrichtung 26 kann auch einen Lautsprecher umfassen, welcher dazu eingerichtet ist, akustische Signale an den Benutzer 2 auszugeben. Dabei kann es sich beispielsweise um Sprachnachrichten oder Töne handeln. Die Mentorenvorrichtung 1 kann auch eine Benutzereingabevorrichtung 29 aufweisen, wobei es sich beispielsweise um einen Touchscreen handeln kann. Mittels der Benutzereingabevorrichtung 29 kann es vorgesehen sein, dass der Benutzer 2 mittels einer Benutzereingabe 25 eines der Unterstützungsprofile 14 als das aktive Unterstützungsprofil 7 auswählen kann. Es kann auch vorgesehen sein, dass der Benutzer mittels einer zweiten Benutzereingabe 30 eines der Unterstützungsprofile 14 anpassen kann oder ein individuelles Unterstützungsprofil 31 erzeugen kann.

### Bezugszeichenliste

- 1: Mentorenvorrichtung
- 2: Benutzer
- 3: Objekt
- 4: Sollverlauf
- 5: Aktuelle Abweichung
- 6: tatsächlicher Verlauf
- 7: Aktives Unterstützungsprofil
- 8: Eingriff
- 9: Akzeptanzwert
- 9A: Akzeptanzwert
- 9B: Akzeptanzwert
- 9C: Akzeptanzwert
- 10: Abweichverhalten
- 11: Vergangene Abweichung
- 12: weiterer tatsächlicher Verlauf
- 13: Angenäherter Sollverlauf
- 14: Unterstützungsprofil
- 14A: Unterstützungsprofil
- 14B: Unterstützungsprofil
- 14C: Unterstützungsprofil
- 14D: Rückführungsunterstützungsprofil
- 14E: Unterstützungsprofil
- 14F: Unterstützungsprofil
- 15: Adaptionswert
- 16: Eingriffsintensität
- 17: Fahrbahnrand
- 18: Sicherheitsabstand
- 19: Sicherheitswert
- 20: Sicherheitsschwellenwert
- 21: Rückführtrajektorie
- 22: Abstand angenäherter Sollverlauf zum Sollverlauf
- 23: Abstand angenäherter Sollverlauf zum weiteren tatsächlichen Verlauf
- 24: Ausgangspunkt
- 25: Benutzereingabe
- 26: Ausgabevorrichtung
- 27: Signal
- 28: Anweisungssignal
- 29: Benutzereingabevorrichtung
- 30: zweite Benutzereingabe
- 31: individuelles Unterstützungsprofil
- R1: Bahnplanung
- R2: Fahrdynamikregelung
- R3: Aktorikregelung
- R4: Lenkung und Antriebsstrang
- R5: Regelung der Eingriffsintensität

## Patentansprüche

1. Mentorenvorrichtung (1) zum Assistieren eines Benutzers (2) bei der Handhabung eines vorbestimmten Objekts (3), wobei die Mentorenvorrichtung (1) dazu eingerichtet ist,
- einen Sollverlauf (4) der Handhabung, der dem Benutzer (2) durch die Mentorenvorrichtung (1) vermittelt werden soll, zu empfangen;
- eine aktuelle Abweichung (5) eines tatsächlichen Verlaufs (6) der Handhabung, wie sie der Benutzer (2) durchführt, von dem Sollverlauf (4) zu ermitteln;
- gemäß einem aktiven Unterstützungsprofil (7) durch die Mentorenvorrichtung (1) einen Eingriff (8) in die Handhabung zur Reduktion der Abweichung (5) durchzuführen;
- einen Akzeptanzwert (9) zu ermitteln, welcher ein Abweichverhalten (10) des Benutzers (2) betreffend vergangene Abweichungen (11) vom Sollverlauf (4) über einen vorbestimmen Zeitraum beschreibt;
**dadurch gekennzeichnet, dass**
die Mentorenvorrichtung (1) dazu eingerichtet ist, in Abhängigkeit von dem Akzeptanzwert (9) den Sollverlauf (4) dem anhand des Abweichverhaltens (10) ermittelten, erwarteten weiteren tatsächlichen Verlauf (12) anzunähern.

2. Mentorenvorrichtung (1) nach Anspruch 1, **dadurch gekennzeichnet, dass** in der Mentorenvorrichtung (1) mehrere Unterstützungsprofile (14) bereitgestellt sind, wobei sich die Unterstützungsprofile (14) zumindest in einer Eingriffsintensität (16), umfassend eine maximal zugelassenen Abweichung des tatsächlichen Verlaufs (6) der Handhabung von dem Sollverlauf (4) und einer Art des Eingriffs, voneinander unterscheiden und die Mentorenvorrichtung (1) dazu eingerichtet ist, in Abhängigkeit von dem Akzeptanzwert (9) aus den Unterstützungsprofilen (14) eines der Unterstützungsprofile (14) als das aktive Unterstützungsprofil (7) auszuwählen.

3. Mentorenvorrichtung (1) nach Anspruch 2, **dadurch gekennzeichnet, dass** das aktive Unterstützungsprofil (7) einen jeweiligen Adaptionswert (15) aufweist, welcher eine maximale Annäherung des Sollverlaufs (4) an den erwarteten weiteren tatsächlichen Verlauf (12) beschreibt.

4. Mentorenvorrichtung (1) nach einem der vorhergehenden Ansprüche, **dadurch gekennzeichnet, dass** die Mentorenvorrichtung (1) eine Ausgabevorrichtung (24) umfasst, welche dazu eingerichtet ist, optische, akustische und/oder haptische Signale (27) an den Benutzer (2) auszugeben, welche den Sollverlauf (4) vermitteln.

5. Mentorenvorrichtung (1) nach Anspruch 4, **dadurch gekennzeichnet, dass** die Mentorenvorrichtung (1) die Ausgabevorrichtung (24) umfasst und dazu eingerichtet ist, optische und/oder akustische und/oder haptische Anweisungssignale (28) zur Reduktion der Abweichung (5) an den Benutzer (2) auszugeben, welche abhängig sind von der Abweichung (5).

6. Mentorenvorrichtung (1) nach Anspruch 2 oder einem der Ansprüche 3 bis 5 in deren Rückbezug auf Anspruch 2, **dadurch gekennzeichnet, dass** die Mentorenvorrichtung (1) dazu eingerichtet ist, einen Sicherheitswert (19) zur Bewertung einer aktuellen Fahrsituation zu berechnen und bei einem Überschreiten eines vorbestimmten Sicherheitsschwellenwertes (20) ein vorbestimmtes Unterstützungsprofil als das aktive Unterstützungsprofil (7) auszuwählen.

7. Mentorenvorrichtung (1) nach Anspruch 6, **dadurch gekennzeichnet, dass** das bei Überschreiten des Sicherheitsschwellenwertes (20) auszuwählende Unterstützungsprofil, der Sicherheitsschwellenwert (20) und/oder der Akzeptanzwert (9) einem jeweiligen Benutzer (2) zugeordnet sind.

8. Mentorenvorrichtung (1) nach Anspruch 2 oder einem der Ansprüche 3 bis 7 in deren Rückbezug auf Anspruch 2, **dadurch gekennzeichnet, dass** die Mentorenvorrichtung (1) eine Eingabevorrichtung (26) aufweist, welche dazu eingerichtet ist, das aktive Unterstützungsprofil (7) in Abhängigkeit einer Benutzereingabe (30) unabhängig von dem Akzeptanzwert (9) vorzugeben, und ein eingestelltes aktives Unterstützungsprofil (7) dabei zu überschreiben.

9. Mentorenvorrichtung (1) nach Anspruch 8, **dadurch gekennzeichnet, dass** die Eingabevorrichtung (26) dazu eingerichtet ist, ein Unterstützungsprofil in Abhängigkeit der Benutzereingabe (30) zu verändern oder zu erzeugen.

10. Mentorenvorrichtung (1) nach einem der vorhergehenden Ansprüche, **dadurch gekennzeichnet, dass** das Objekt (3) ein Kraftfahrzeug ist und der Sollverlauf (4) eine Fahrtrajektorie und der Eingriff (8) eine Änderung einer Längssteuerung und/oder einer Quersteuerung umfasst.

11. Mentorenvorrichtung (1) nach Anspruch 10 in dessen Rückbezug auf Anspruch 6, **dadurch gekennzeichnet, dass** die Mentorenvorrichtung (1) dazu eingerichtet ist, das Kraftfahrzeug bei einem Überschreiten des Sicherheitsschwellenwertes (20) entlang einer Rückführtrajektorie (21) auf den Sollverlauf der Fahrtrajektorie zurückzuführen.

12. Mentorenvorrichtung (1) nach Anspruch 10 oder 11 in deren Rückbezug auf Anspruch 6 oder 7 und Anspruch 2, **dadurch gekennzeichnet, dass** die Mentorenvorrichtung (1) eine Regelung der Eingriffsintensität (R5) umfasst, welche dazu eingerichtet ist, die Eingriffsintensität des aktiven Unterstützungsprofils (7) in Abhängigkeit des Sicherheitswerts (19) anzupassen.

13. Mentorenvorrichtung (1) nach einem der Ansprüche 10 bis 12, **dadurch gekennzeichnet, dass** die Mentorenvorrichtung (1) dazu eingerichtet ist, das Kraftfahrzeug entlang der Fahrtrajektorie vollautomatisiert zu führen, um den Sollverlauf (4) zu demonstrieren.

14. Verfahren zum Assistieren eines Benutzers (2) bei der Handhabung eines vorbestimmten Objekts (3) mittels einer Mentorenvorrichtung (1), wobei durch die Mentorenvorrichtung (1),
- ein Sollverlauf (4) der Handhabung, der dem Benutzer (2) durch die Mentorenvorrichtung (1) vermittelt werden soll, empfangen wird;
- eine aktuelle Abweichung (5) eines tatsächlichen Verlaufs (6) der Handhabung, wie sie der Benutzer (2) durchführt, von dem Sollverlauf (4) ermittelt wird;
- gemäß einem aktiven Unterstützungsprofil (7) durch die Mentorenvorrichtung (1) ein Eingriff (8) in die Handhabung zur Reduktion der Abweichung (5) durchgeführt wird; und
- ein Akzeptanzwert (9) ermittelt wird, welcher ein Abweichverhalten (10) des Benutzers (2) betreffend vergangene Abweichungen (11) vom Sollverlauf (4) über einen vorbestimmen Zeitraum beschreibt;
**dadurch gekennzeichnet, dass**
durch die Mentorenvorrichtung (1) in Abhängigkeit von dem Akzeptanzwert (9) der Sollverlauf (4) dem anhand des Abweichverhaltens (10) ermittelten, erwarteten weiteren tatsächlichen Verlauf (12) angenähert wird.

15. Kraftfahrzeug mit einer Mentorenvorrichtung (1) nach einem der Ansprüche 1 bis 13.

## Claims

1. Mentor device (1) for assisting a user (2) in the handling of a predetermined object (3), wherein the mentor device (1) is configured
- to receive a target handling course (4) which is intended to be conveyed to the user (2) by the mentor device (1);
- to determine a current deviation (5) of an actual course (6) of the handling, as performed by the user (2), from the target course (4);
- to intervene (8) in the handling, according to an active assistance profile (7) provided by the mentor device (1), in order to reduce the deviation (5);
- to determine an acceptance value (9) which describes a deviation behaviour (10) of the user (2) relating to past deviations (11) from the target course (4) over a predetermined period;
**characterized in that**
the mentor device (1) is designed to bring the target course (4) closer to the expected further actual course (12), determined on the basis of the deviation behaviour (10), on the basis of the acceptance value (9).

2. Mentor device (1) according to Claim 1, **characterized in that** a plurality of assistance profiles (14) are provided in the mentor device (1), wherein the assistance profiles (14) differ from one another at least in terms of an intervention intensity (16), comprising a maximum permitted deviation of the actual handling course (6) from the target course (4) and a type of intervention, and the mentor device (1) is configured to select one of the assistance profiles (14) from the assistance profiles (14) as the active assistance profile (7) on the basis of the acceptance value (9).

3. Mentor device (1) according to Claim 2, **characterized in that** the active assistance profile (7) has a respective adaptation value (15) which describes a maximum approximation of the target course (4) to the expected further actual course (12).

4. Mentor device (1) according to one of the preceding claims, **characterized in that** the mentor device (1) comprises an output device (24) which is configured to output optical, acoustic and/or haptic signals (27), which convey the target course (4), to the user (2).

5. Mentor device (1) according to Claim 4, **characterized in that** the mentor device (1) comprises the output device (24) and is configured to output optical and/or acoustic and/or haptic instruction signals (28) for reducing the deviation (5) to the user (2), which signals are dependent on the deviation (5).

6. Mentor device (1) according to Claim 2 or one of Claims 3 to 5 in their dependency reference to Claim 2, **characterized in that** the mentor device (1) is configured to calculate a safety value (19) for assessing a current driving situation and to select a predetermined assistance profile as the active assistance profile (7) if a predetermined safety threshold value (20) is exceeded.

7. Mentor device (1) according to Claim 6, **characterized in that** the assistance profile to be selected when the safety threshold value (20) is exceeded, the safety threshold value (20) and/or the acceptance value (9) is/are assigned to a respective user (2) .

8. Mentor device (1) according to Claim 2 or one of Claims 3 to 7 in their dependency reference to Claim 2, **characterized in that** the mentor device (1) has an input device (26) which is configured to specify the active assistance profile (7) on the basis of a user input (30), irrespective of the acceptance value (9), and to overwrite an active assistance profile (7) which has been set.

9. Mentor device (1) according to Claim 8, **characterized in that** the input device (26) is configured to change or generate an assistance profile on the basis of the user input (30).

10. Mentor device (1) according to one of the preceding claims, **characterized in that** the object (3) is a motor vehicle and the target course (4) comprises a driving trajectory and the intervention (8) comprises a change in longitudinal control and/or lateral control.

11. Mentor device (1) according to Claim 10 in its dependency reference to Claim 6, **characterized in that** the mentor device (1) is configured to return the motor vehicle to the target course of the driving trajectory along a return trajectory (21) if the safety threshold value (20) is exceeded.

12. Mentor device (1) according to Claim 10 or 11 in its dependency reference to Claim 6 or 7 and Claim 2, **characterized in that** the mentor device (1) comprises regulation of the intervention intensity (R5), which is configured to adapt the intervention intensity of the active assistance profile (7) on the basis of the safety value (19).

13. Mentor device (1) according to one of Claims 10 to 12, **characterized in that** the mentor device (1) is configured to guide the motor vehicle in a fully automated manner along the driving trajectory in order to demonstrate the target course (4).

14. Method for assisting a user (2) in the handling of a predetermined object (3) by means of a mentor device (1), wherein the mentor device (1)
- receives a target handling course (4) which is intended to be conveyed to the user (2) by the mentor device (1);
- determines a current deviation (5) of an actual course (6) of the handling, as performed by the user (2), from the target course (4);
- intervenes (8) in the handling, according to an active assistance profile (7) provided by the mentor device (1), in order to reduce the deviation (5); and
- determines an acceptance value (9) which describes a deviation behaviour (10) of the user (2) relating to past deviations (11) from the target course (4) over a predetermined period;
**characterized in that**
the mentor device (1) brings the target course (4) closer to the expected further actual course (12), determined on the basis of the deviation behaviour (10), on the basis of the acceptance value (9).

15. Motor vehicle having a mentor device (1) according to one of Claims 1 to 13.

## Revendications

1. Dispositif de guidage (1) pour assister un utilisateur (2) lors de la manipulation d'un objet (3) prédéterminé, le dispositif de guidage (1) étant conçu pour
- recevoir un tracé de consigne (4) de la manipulation, qui doit être communiqué à l'utilisateur (2) par le dispositif de guidage (1) ;
- identifier une déviation (5) actuelle d'un tracé effectif (6) de la manipulation, tel que l'utilisateur (2) le réalise, par rapport au tracé de consigne (4) ;
- selon un profil d'assistance actif (7) par le dispositif de guidage (1), effectuer une intervention (8) dans la manipulation en vue de réduire la déviation (5) ;
- identifier une valeur d'acceptabilité (9), laquelle décrit un comportement de déviation (10) de l'utilisateur (2) concernant les déviations passées (11) par rapport au tracé de consigne (4) sur une période prédéterminée ;
**caractérisé en ce que**
le dispositif de guidage (1) est conçu pour, en fonction de la valeur d'acceptabilité (9), approcher le tracé de consigne (4) du tracé effectif supplémentaire (12) attendu, identifié à l'aide du comportement de déviation (10) .

2. Dispositif de guidage (1) selon la revendication 1, **caractérisé en ce que** plusieurs profils d'assistance (14) sont fournis dans le dispositif de guidage (1), les profils d'assistance (14) se différenciant entre eux au moins par une intensité d'intervention (16), comprenant une déviation maximale admissible du tracé effectif (6) de la manipulation par rapport au tracé de consigne (4) et une nature de l'intervention, et le dispositif de guidage (1) étant configuré pour sélectionner parmi les profils d'assistance (14), en fonction de la valeur d'acceptabilité (9), l'un des profils d'assistance (14) en tant que profil d'assistance actif (7).

3. Dispositif de guidage (1) selon la revendication 2, **caractérisé en ce que** le profil d'assistance actif (7) possède une valeur d'adaptation (15) respective, laquelle décrit une approche maximale du tracé de consigne (4) du tracé effectif supplémentaire (12) attendu.

4. Dispositif de guidage (1) selon l'une des revendications précédentes, **caractérisé en ce que** le dispositif de guidage (1) comporte un dispositif de sortie (24), lequel est conçu pour délivrer en sortie, à l'attention de l'utilisateur (2), des signaux (27) visuels, sonores et/ou haptiques qui communiquent le tracé de consigne (4).

5. Dispositif de guidage (1) selon la revendication 4, **caractérisé en ce que** le dispositif de guidage (1) comporte le dispositif de sortie (24) et est conçu pour délivrer en sortie, à l'attention de l'utilisateur (2) et en vue de réduire la déviation (5), des signaux d'instruction (28) visuels, sonores et/ou haptiques qui sont dépendants de la déviation (5).

6. Dispositif de guidage (1) selon la revendication 2 ou l'une des revendications 3 à 5 en référence à la revendication 2, **caractérisé en ce que** le dispositif de guidage (1) est conçu pour calculer une valeur de sécurité (19) en vue d'évaluer une situation de conduite actuelle et sélectionner un profil d'assistance prédéterminée comme profil d'assistance actif (7) dans le cas d'un dépassement d'une valeur de seuil de sécurité (20) prédéterminée.

7. Dispositif de guidage (1) selon la revendication 6, **caractérisé en ce que** le profil d'assistance à sélectionner dans le cas d'un dépassement de la valeur de seuil de sécurité (20), la valeur de seuil de sécurité (20) et/ou la valeur d'acceptabilité (9) sont associés à un utilisateur (2) respectif.

8. Dispositif de guidage (1) selon la revendication 2 ou l'une des revendications 3 à 7 en référence à la revendication 2, **caractérisé en ce que** le dispositif de guidage (1) possède un dispositif de saisie (26), lequel est conçu pour prédéfinir le profil d'assistance actif (7) en fonction d'une saisie d'utilisateur (30) indépendamment de la valeur d'acceptabilité (9) et pour écraser ici un profil d'assistance actif (7) réglé.

9. Dispositif de guidage (1) selon la revendication 8, **caractérisé en ce que** le dispositif de saisie (26) est conçu pour modifier ou générer un profil d'assistance en fonction de la saisie d'utilisateur (30).

10. Dispositif de guidage (1) selon l'une des revendications précédentes, **caractérisé en ce que** l'objet (3) est un véhicule automobile et le tracé de consigne (4) comprend une trajectoire de déplacement et l'intervention (8) une modification d'une commande longitudinale et/ou d'une commande transversale.

11. Dispositif de guidage (1) selon la revendication 10 dans sa référence à la revendication 6, **caractérisé en ce que** le dispositif de guidage (1) est conçu pour, dans le cas d'un dépassement de la valeur de seuil de sécurité (20), ramener le véhicule automobile le long d'une trajectoire de retour (21) sur le tracé de consigne de la trajectoire de déplacement.

12. Dispositif de guidage (1) selon la revendication 10 ou 11 dans leur référence à la revendication 6 ou 7 et à la revendication 2 , **caractérisé en ce que** le dispositif de guidage (1) comporte une régulation de l'intensité d'intervention (R5), laquelle est conçue pour adapter l'intensité d'intervention du profil d'assistance actif (7) en fonction de la valeur de sécurité (19).

13. Dispositif de guidage (1) selon l'une des revendications 10 à 12, **caractérisé en ce que** le dispositif de guidage (1) est conçu pour conduire le véhicule automobile le long de la trajectoire de déplacement de manière entièrement automatisée afin de faire la démonstration du tracé de consigne (4).

14. Procédé pour assister un utilisateur (2) lors de la manipulation d'un objet (3) prédéterminé au moyen d'un dispositif de guidage (1), le dispositif de guidage (1)
- recevant un tracé de consigne (4) de la manipulation, qui doit être communiqué à l'utilisateur (2) par le dispositif de guidage (1) ;
- identifiant une déviation (5) actuelle d'un tracé effectif (6) de la manipulation, tel que l'utilisateur (2) le réalise, par rapport au tracé de consigne (4) ;
- selon un profil d'assistance actif (7) par le dispositif de guidage (1), effectuant une intervention (8) dans la manipulation en vue de réduire la déviation (5) ;
- identifiant une valeur d'acceptabilité (9), laquelle décrit un comportement de déviation (10) de l'utilisateur (2) concernant les déviations passées (11) par rapport au tracé de consigne (4) sur une période prédéterminée ;
**caractérisé en ce que**
le tracé de consigne (4) du tracé effectif supplémentaire (12) attendu, identifié à l'aide du comportement de déviation (10) est approché par le dispositif de guidage (1) en fonction de la valeur d'acceptabilité (9).

15. Véhicule automobile comprenant un dispositif de guidage (1) selon l'une des revendications 1 à 13.
